# EUROPEAN PATENT APPLICATION

(11) **EP 4 831 937 A1**
(43) Date of publication of application: **28.10.2026**
(21) Application number: 26174181.3
(22) Date of filing: 23.04.2026
(51) Int. Cl.: G06V 20/20, G01C 21/36, G06V 30/422, G02B 27/01, G06T 19/00, G09B 29/00

(54) **PHYSICAL MAP GEOLOCATING AND VIRTUAL AUGMENTATION**

(30) Priority: 24.04.2025 US 202563793959 P; 22.04.2026 US 202619654680
(71) Applicant: Apple Inc., Cupertino, CA 95014 (US)
(72) Inventor: DUNKLEY, Oliver, M., Cupertino, 95014 (US); LIPSKI, Christian, Cupertino, 95014 (US)
(74) Representative: COPA Copenhagen Patents

(57) **Abstract**

Various implementations augment the appearance of and/or add interactive functions to real-world maps in extended reality (XR) experiences. For example, an head-mounted device (HMD) user may view a real-world map on the wall and the device may recognize the map (e.g., using a classifier), determine the geographic boundaries represented in the map, and augment the map's view and/or add interactive features based on identifying info specific to that area. The real-world map may be inspected (e.g., by identifying features, landmarks, edges, etc.) using shape matching, OCR, visual inspection, ML, etc. to identify the boundaries and the map thus need not be Euclidian, e.g., could be tourist map, subway map, curved map/globe, etc. Augmentations may show points of interests, previously-visited locations or routes (e.g., how did I get here), new/future route info, etc. The real-world map may be made interactive and/or altered to have a different format or style.

## Description

### TECHNICAL FIELD

The present disclosure generally relates to electronic devices that provide extended reality (XR) experiences involving physical maps that are present within the device user's physical environment.

### BACKGROUND

Existing user interaction systems may be improved with respect to efficiently and effectively facilitating improved user experiences in which a physical map is present within a device user's physical environment.

### SUMMARY

Various implementations disclosed herein include devices, systems, and methods that augment the appearance of and/or add interactive functions to real-world (i.e., physical as opposed to virtual/electronic) maps in XR experiences. For example, a head-mounted device (HMD) user may use the HMD view an environment that includes a real-world map on the wall, and the device may recognize the map (e.g., using a classifier), determine the geographic boundaries represented in the map, and augment the map's view and/or add interactive features based on identifying information specific to that area. The real-world map may be inspected (e.g., by identifying features, landmarks, edges, etc.) using shape matching, optical character recognition (OCR), visual inspection, machine learning (ML), etc. to identify the boundaries. The map need not be Euclidian, e.g., the map may have a tourist map format, subway map format, other format in which distances, directions, and positions are not strictly accurate, curved map/globe format, etc.

Augmentations provided based on map information may show or otherwise provide information about points of interests, previously-visited locations or routes (e.g., how did I get here), new/future route info, etc. Augmentations may additionally, or alternatively, show where the user is on the map. Augmentations may be positioned on the map based on or otherwise with respect to the user's location shown on the map (e.g., using lines or arrows from the user's location to a destination). In some implementations, a real-world map that is fixed, unchanging, or otherwise non-interactive is made variable and/or interactive, e.g., allowing the user to provide input to select a landmark or route on the map (e.g., via gaze or touch detected by device sensors) and then see augmentations in the XR environment that provide arrows, identifiers, etc., on and/or separate from the map and showing where to go, pointing to real-world landmarks, etc. A map may be visually altered to have a different format, style, expanded on one or more sides, and/or enhanced with overlays based on preferences, plans, input, etc.

In some implementations, a method is performed by a processor executing instructions stored at a non-transitory computer-readable medium. Such a method may involve identifying a real-world map in image data comprising one or more images captured by a sensor on the device. The method may involve determining a boundary of a real-world area (e.g., one or more sides of a bounded rectangular or other-shaped area) depicted by the real-world map. A boundary may be identified based on identifying a feature of the real-world map in the image data. For example, one or more boundaries may be determined based on identifying a top/north-most identified landmark, a right/west-most identified landmark, etc. A boundary may be based on identifying which landmarks are farthest east, west, etc.; identifying a geographic feature that is south-most such as the tip of a peninsula, a building that is visible in the map at a south-most position, etc. The method may further involve providing an XR experience with a supplemental capability based on the boundary of the real-world area depicted by the real-world map. As examples, this may involve providing augmentations corresponding to real-world items within the area and/or interactive functionality on the real-world map based on the area.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 illustrates an exemplary electronic device operating in a physical environment, in accordance with some implementations.
Figure 2 illustrates boundaries identified for a physical map of the physical environment of Figure 1, in accordance with some implementations.
Figure 3 illustrates a view provided by the electronic device of Figure 1 in which an XR experience is augmented based on the physical map, in accordance with some implementations.
Figure 4 illustrates another view provided by the electronic device of Figure 1 in which the XR experience is augmented based on the physical map, in accordance with some implementations.
Figure 5 illustrates another view provided by the electronic device of Figure 1 in which the XR experience is augmented based on the physical map, in accordance with some implementations.
Figure 6 illustrates another view provided by the electronic device of Figure 1 in which the XR experience is augmented with an interactive feature based on the physical map, in accordance with some implementations.
Figure 7 illustrates another view provided by the electronic device of Figure 1 in which the XR experience is augmented based on the physical map, in accordance with some implementations.
Figure 8 is a flowchart illustrating a method that augments an XR experience based on a physical map, in accordance with some implementations.
Figure 9 is a block diagram of an electronic device, in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

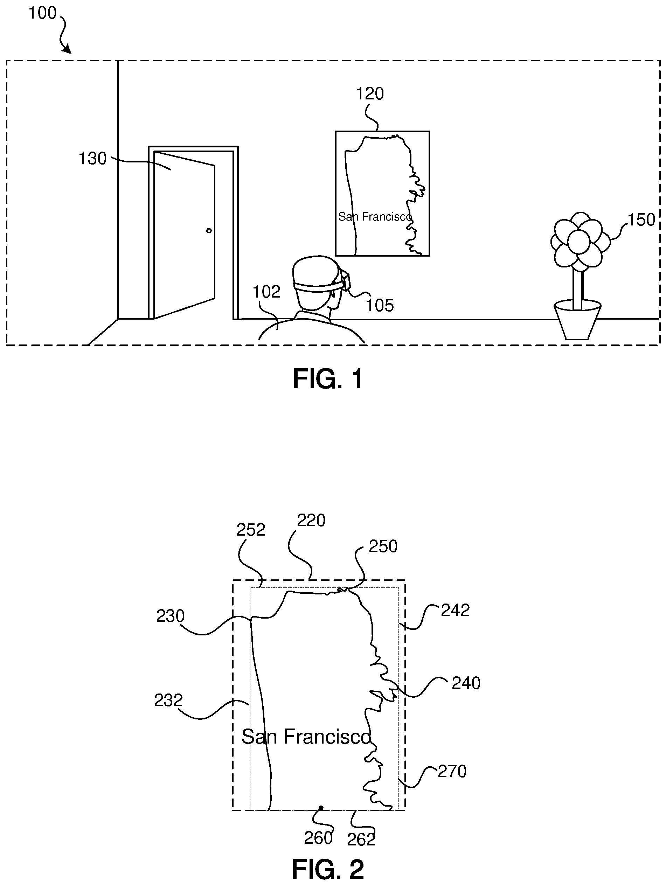

**Figure** 1 illustrates an exemplary electronic device 105 operating in a physical environment 100. In the example of Figure 1, the physical environment 100 is a room that includes a map 120, a door 130, and a potted plant 150. The physical environment may include one or more additional devices (not shown) in communication with electronic device 105. Such devices may be separate and distinct devices, e.g., using different processing units, different input mechanisms, different output mechanisms, etc. and may be capable of functioning independently of one another. However, the devices may be in communication with one another and/or may be configured to share information with one another including, but not limited to, sensor data about the map 120 and other contextual aspects of the physical environment 100 and/or user 102.

The electronic device 105 (and/or other devices in communication therewith) may include one or more cameras, microphones, depth sensors, or other sensors that can be used to capture information (e.g., images, sound, lighting characteristics, etc.) about and evaluate the physical environment 100 and the objects within it, as well as information about the user 102 of electronic device 105. The information about the physical environment 100 and/or user 102 may be used to supplement the user's experience.

In some implementations, sensor information from the electronic device 105 provides information about the physical environment 100 and/or user 102 that may be used to identify the location of the electronic device 105 and/or user 102, e.g., GPS coordinates, postal address of a building the user is in, which room of a multi-room building the user is in, etc. In some implementations, sensor information from the electronic device 105 provides information about the user 102 relative to the elements in physical environment 100. For example, sensor data from one or more outward and/or user facing cameras may be used to identify elements within the physical environment, the user's positional relationship to such elements, and/or how the user is interacting with those elements (e.g., looking at the map 120 or otherwise exhibiting an intention to interact with the map 120, etc.). In some implementations sensors on the electronic device 105 capture sensor data that is used to determine and track a gaze direction and/or hand position/configuration of the user 102. Such gaze data and/or hand data may be used to identify the user's intention to interact with the map 120 via gaze and/or hand-based input modalities.

In some implementations, the electronic device 105 does not include a display and the user views the physical environment 100 directly, e.g., using optical see-through components and/or through transparent lenses on the electronic device 105. In some implementations, such lenses are not configured to display content. In some implementations, such lenses are configured to display content (e.g., presenting an extended reality (XR) environment by displaying augmentations or other virtual content (that augments the user's view of the physical environment 100) using optical waveguides that transmit light to display content on the lenses). Augmentations may alternatively, or additionally, include audio content produced via one or more speakers on the electronic device 105.

In some implementations, the electronic device 105 includes a display that presents views of the physical environment 100 that are based on images captured by outward-facing cameras on the electronic device 105, e.g., by providing passthrough video, with or without added virtual content. In some implementations, the display presents an XR environment by displaying augmentations or other virtual content (that augments displayed depictions of the physical environment 100).

In various implementations, views of an XR environment may be provided via the electronic device 105. Such an XR environment may include passthrough video views of a 3D environment (e.g., the proximate physical environment 100) that are generated based on camera images and/or depth camera images of the physical environment 100. Such an XR environment may include virtual content that is positioned at 3D locations relative to a 3D coordinate system associated with the XR environment, which may correspond to a 3D coordinate system of the physical environment 100 (e.g., positioning virtual content to appear as if it were on or adjacent to map 120). The virtual content may augment the appearance of content displayed (e.g., displaying highlighting that appears around a map element depicted on map 120).

In some implementations, views of an XR environment may be provided to one or more participants (e.g., user 102 and/or other participants not shown) via first electronic device 105 (e.g., a wearable device such as an HMD). Such an XR environment may include views of a 3D environment that are generated based on camera images and/or depth camera images of the physical environment 100. Such an XR environment may include virtual content that is positioned at 3D locations relative to a 3D coordinate system (i.e., a 3D space) associated with the XR environment, which may correspond to a 3D coordinate system of the physical environment 100.

In some implementations, video (e.g., pass-through video depicting a physical environment) is received from an image sensor of a device (e.g., device 105). In some implementations, a 3D representation of a virtual environment is aligned with a 3D coordinate system of the physical environment. A sizing of the 3D representation of the virtual environment may be generated based on, for example, a scale of the physical environment or a positioning of an open space, floor, wall, etc., such that the 3D representation is configured to align with corresponding features of the physical environment. In some implementations, a viewpoint (e.g., of the user 102) within the 3D coordinate system may be determined based on a position of the electronic device within the physical environment. The viewpoint may be determined based on, for example, image data, depth sensor data, motion sensor data, etc., which may be retrieved via a virtual inertial odometry system (VIO), a simultaneous localization and mapping (SLAM) system, etc.

In some implementations, views of an XR environment are provided via an HMD (e.g., AR glasses) that includes a see-through display, wherein virtual content is presented within the views. For example, such a device may comprise one or more lenses through which the user 102 observes the physical environment 100 and a presentation component (e.g., one or more light sources and/or one or more waveguides) that cause virtual content to be viewed by the user within the views seen through the one or more lenses.

In some implementations, the electronic device 105 provides an XR experience, e.g., views of an environment (e.g., physical environment 100, a virtual environment, an environment that mixes real and virtual elements, etc.). The electronic device 105 may augment a physical environment experience providing content (e.g., visual and/or audio content). The electronic device 105 may augment the appearance of and/or add interactive functions to real-world (i.e., physical) maps, such as map 120, in XR experiences. For example, user 105 may use the electronic device 105 to view a physical environment 100 that includes real-world map 120 on a wall, and the electronic device 105 may recognize the map 120 (e.g., using a classifier), determine the geographic boundaries represented in the map 120, and augment the map's view and/or add interactive features based on identifying information specific to that area. The real-world map 120 may be inspected (e.g., by identifying features, landmarks, edges, etc.) using shape matching, optical character recognition (OCR), visual inspection, machine learning (ML), etc. to identify the boundaries. The map 120 need not be Euclidian, e.g., the map 120 may have a tourist map format, subway map format, other format in which distances, directions, and/or positions are not strictly accurate, curved map/globe format, etc.

Augmentations provided based on map 120 information may show or otherwise provide information about points of interests (e.g., user's current location within map 120), previously-visited locations or routes (e.g., how did I get here), new/future route info, etc. In some implementations, the map 120 that is fixed, unchanging, or otherwise non-interactive, but is made variable and/or interactive within the XR experience, e.g., enabling the user 105 to provide input to select a landmark or route on the map 105 (e.g., via gaze or touch detected by device sensors) and then see augmentations in views of an XR environment that provide arrows, identifiers, etc., on and/or separate from the map 120 and showing where to go, pointing to real-world landmarks, etc. The map 120 map may be visually altered within the views of the XR experience to have a different format, style, expanded on one or more sides, and/or enhanced with overlays based on preferences, plans, input, etc.

In some implementations, the electronic device 105 uses sensor data from one or more sensors to evaluate (e.g., constantly, periodically, upon a trigger condition, etc.), the physical environment 105 to detect the presence of a map, such as map 120, and/or to detect that the user 105 is looking at, attentive to, asking about, in need of information for, or otherwise detecting a context in which supplementing the experience based on such a map may be desirable. In some implementations, the electronic device 105 inspects sensor data and/or other information to understand the map, e.g., what geographic area is depicted, what the location of the geographic area is in relation to the world coordinate space and/or with respect to a larger map that includes surrounding areas, what features are mapped versus not mapped, what the boundaries are of the map, where the user's current position would be if represented on the map, what features or portions of the map are of interest to the user (e.g., based on where the user is looking or other contextual factors), what supplementations may be of interest to the user based on current contextual factors and/or the user's future plans, etc.

In some implementations, the electronic device 105 identifies an identity of the map, e.g., a stock keeping unit (SKU), code, or other information uniquely identifying the map. In some implementations, the electronic device 105 determines that the identity of the map is unknown or cannot be determined and, accordingly, inspects the map to determine what is depicted by the map. The electronic device 105 may determine a geographic region and/or locations of interest that are associated with a boundary around the geographic region depicted by the map. Given the boundary of the region depicted by the map and/or locations of interest that are associated with such a boundary, the electronic device 105 may access information associated therewith (e.g., other maps, datasets, prior user information, etc.) and supplement the user's XR experience accordingly.

Visual inspection of a map (e.g., as captured in image and/or other sensor data via electronic device 105) may involve an algorithm or machine learning model that identifies boundaries. Such computer-implemented processes may involve identifying map edges, land/water boundaries depicted in the map, political boundaries depicted in the map, cites, towns, buildings, landmarks, and other locations depicted within the map, etc. In one example, a set of landmarks or other features is identified based on image analysis and one or more boundaries are selected to encompass a region that includes all of the landmarks or other features.

Some implementations involve inspecting a map via a decision tree or similar process in which a series of evaluations is performed to identify the type of map, its boundary(ies), what is depicted on the map, what other information is available, etc. Such a decision tree or similar process may involve algorithm and/or ML-based evaluations, e.g., using ML classifiers to determine whether there is a map, whether the map is Euclidian, whether the map corresponds to the user's current position, etc. Map evaluations may be gated to conserve device resources (e.g., power, processing, etc.), only determining whether a map is present periodically but only detecting boundaries and/or map features in certain circumstances.

In some implementations, the electronic device 105 determines that one or more physical environment elements that are outside of the boundary identified for a map may be of interest to the user, e.g., there is a restaurant that the user likes just outside of the visible content depicted by the map. The electronic device 105 may supplement the user's XR experience with information about elements within the boundary and/or outside of the boundary identified for the map 120.

Some implementations provide augmentations or otherwise supplement a user's XR experience by providing information about a path or route based on identifying a physical map (e.g., map 120) and/or a user interaction with a physical map. For example, an overlay may be shown over a physical map that shows one or more routes that the user previously took when navigating within the area/boundary depicted on such a map. As another example, information may be provided that shows a route from the user's current location to a desired location without or outside of the map's boundaries.

The terms "physical map" and "real-world map" are used interchangeably herein and refer to any map that is found in a user's environment separate from the user's personal electronic device(s). A physical map or real-world map may be a tangible map, e.g., on paper, a billboard, a wall, etc. or may be any other form of map (e.g., on an electronic display) within a physical environment that is separate from the user's own devices, e.g., including electronic maps displayed on billboards, informational kiosks, etc.

Some implementations involve identifying a physical map, e.g., identifying that an object within the user's physical environment is a map, identifying what the map depicts, identifying that particular roads, walkways, buildings, etc. are within the map, identifying the type of the map, and/or identifying a particular map identifier (e.g., a SKU or other unique map identifier). In some implementations, directions (e.g., walking direction, driving directions, biking directions, etc.) are determined based on identifying a physical map, current location of the user within the physical map, and/or user information, e.g., information about where a user is going, an upcoming appointment based on calendar data, etc. The map can include various degrees of information, e.g., some with have lots of highly-detailed and dense information about buildings and other locations within the map area while others will only show outlines of geographic areas or political boundaries, and others will provide intermediate levels of detail. The directions may be used to supplement the user's XR experience, for example, by providing visual and/or audio cues instructing the user where the route is and/or where to go next. Visual cues may be provided on or around the map and/or relative to the user's view of the environment. Audio cues may be spatialized, e.g., appearing to come from the map and/or indicate a direction in the environment, e.g., a "come this way" audio cue sounding as if it comes from a particular direction that the user should go next to proceed along an identified route.

In some implementations augmentations are provided relative to a physical map, e.g., on top of or instead of the map or a portion of the map. A copy of the physical map (e.g., in image data or from another source) may be captured and/or saved for later use. A copy of an augmented physical map may similar be captured and/or saved for later use. For example, user on a hiking trail may look at a map of the trails in an area at the park entrance, see an augmentation showing them a particular route through a network of multiple trails on the map, and have a copy of the map with the augmented route save for later use, e.g., when the user has walked away from the physical map along a trail and wishes to see the map again. The map may be redisplayed (e.g., as a virtual content item in the XR experience and may be further updated or augmented, e.g., showing the user's new current location on the copy of the map that is displayed in the XR experience. In some implementations, the virtual map is continuously displayed and the user is presented with their current location, e.g., seeing their current location indicated on the map as the user walks through the trail system. Alternative or additional information may be displayed, e.g., showing total route distance, distance traveled along route so far, distance along route to go, alternative route available based on current position, etc.

Virtual content providing directions may provide indications relative to the physical environment. For example, a user may look at a map that is near the opening to three trails. The user may provide input identifying one of the trails (e.g., gazing at a point along that trail and then making a gesture such as a pinch) and supplemental content may be displayed accordingly. For example, the user's view of the map may be augmented to highlight that trail. As another example, the user may look away from the map at the openings to the three trails and see an arrow that appears to float above the ground (or other visual indicator) at the opening that corresponds to the trail that the user identified via the user input.

The electronic device 105 may identify a map and intended route of a user, track the user's progress along the route, and provide visual or audio information as the user progresses along the route. For example, the user may come to a split in a trail and ask "where do I go" and the electronic device 105 may determine that the user is located at a point at which a trail splits, diverges, or otherwise presents alternative paths (e.g., via image analysis to identify multiple trails/paths in view, GPS or other location tracking, etc.). The electronic device 105 may provide feedback, e.g., with an arrow pointing to the path corresponding to the user's preselected route, information showing options such as that following the left route will mean walking 0.5 miles to the destination while going the right route will mean walking 2.3 miles to the destination, information showing the end points of the routes, e.g., identifying that the left route goes to the overlook at the river that runs through the park, the right route goes to a waterfall, etc.

In some implementations a view of a physical map is supplemented by changing the style of a map, e.g., from a road map to an elevation map, from a map without geographic boundaries to a map with geographic boundaries, from a black and white map to a color map with colors indicative of map features, terrain, etc.

Some implementations provide a view of a physical map that show a user's current position and the direction the user is facing relative to the directions on the map, e.g., if the user is facing east and east is to the right on the map that an indication may be shown of the user's position on the map and showing that the user is facing to the right from the position relative to the map content.

Information about a user's prior experiences may be shown. For example, when revisiting the park with trails described in the example above, the physical map may be augmented with information that the user took a particular trail last year or on a prior visit. The information may highlight all routes previously taken, e.g., enabling the adventurous hiker to identify and explore trails/routes that they have not previously taken.

In some implementations a physical map includes a paper or otherwise unchanging or non-interactive map, and supplementations are provided to enable the user to experience the map as if it were a digital, changing, and/or interactive map. Interactions with the map, e.g., via user gaze, touch, pointing, other gestures, audio commands, etc., may be recognized and interpreted in light of determining an understanding of what the map shows and/or other contextual information. A user may provide input to identify features of interest, obtain more information about items displayed, "zoom" the map in and out (e.g., by replacing the map with virtual content showing the maps area zoomed in or out respectively), expand or reduce the size of the map, add user customizations to the map (e.g., images, links, etc.), change the map view/format (e.g., to a satellite map, traffic map, terrain map, elevation map, etc.).

Context can be used to customize map supplementations, e.g., providing different information during the day versus night, during rush hour versus the weekend, when the user has an upcoming appoint, when a user's destination is known, etc. In one example, a user views an amusement park map showing the locations of the rides and attractions that the park offers. The electronic device identifies the maps and presents information to the user during the user's experience in the park, e.g., providing navigation to a ride selected by the user, identifying similar rides (e.g., "if you liked that ride consider this nearby ride next, it also has loops and has a 10 minute wait time right now).

**Figure 2** illustrates boundaries identified for the map 120 of the physical environment 100 of Figure 1. In this example, a portion of image data of images captured in the physical environment 100 is analyzed and the presence of the physical map 120 is detected. If multiple images include the physical map 120 then one or more best images may be selected for further evaluation (e.g., based on criteria that assesses the completeness, clarity, viewpoint angle, etc. of the images). One or more images of the map 120 may be compiled and used for further assessment. Such one or more images an image from which image segment 220 is selected, e.g., via a cropping algorithm. A cropping algorithm may be utilized to select portions of an image that correspond to map data. This may be based on identifying one or more map edges, borders, frames, etc.

Figure 2 illustrates a portion 220 of an image of the physical environment that corresponds to the physical map 120. In this example, this portion 220 is evaluated via one or more processes (e.g., algorithms or machine learning models) to determine the boundary(ies) of the real-world that are depicted in the map. The boundaries may correspond to east, west, north, and south boundaries. In this example, a western-most point 230 is identified and used to identify a western boundary 232, a northern-most point 250 is identified and used to identify a northern-most boundary 252, an eastern-most point 240 is identified and used to identify an easter-most boundary 242, and a southern-most feature 260 is identified and used to identify a southern-most boundary 262. Points and features used to identify boundaries can include, but are not limited to including, land/sea intersection points, road intersection points, buildings, landmarks, etc. Boundaries may be selected to encompass complete areas even though the map represents less than such complete areas. For example, a southern most feature may be a city park of which the map only shows the northern-half. The boundary may be selected to encompass the entire park. Alternatively, the feature may be inspected to determine where the map intersects it (e.g., at a halfway point) and the boundary selected based on that determination.

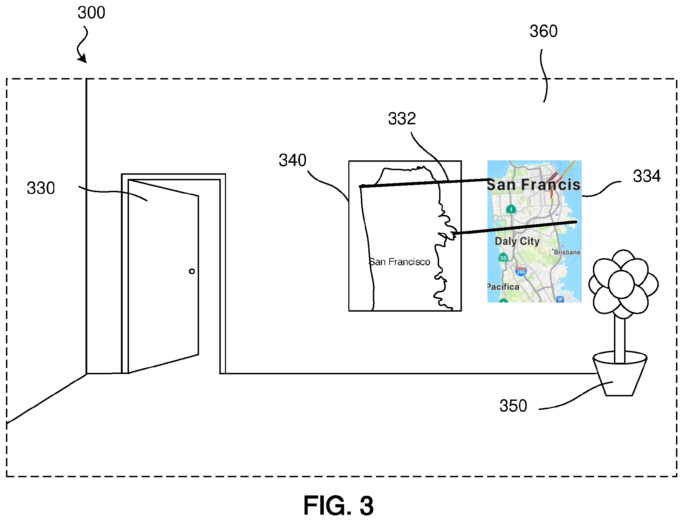

**Figure 3** illustrates a view 300 provided by the electronic device 105 of Figure 1 in which an XR experience is augmented based on the map 120. The view 300 includes depiction 340 of map 120, depiction 350 of potted plant 150, and depiction 330 of door 130. In this example, the boundaries that were identified based on the map 120 (e.g., as described with respect to Figure 2) are used to identify an additional map 334 of the region within those boundaries (i.e., within a region encompassed by boundaries 232, 242, 252, 262). In the view 300, this additional map 334 is positioned in an adjacent position relative to depiction 340 of map 120. The additional map 334 may be given a 3D position corresponding to an adjacent position to the map 120 in the physical environment 100. Thus, the additional map 334 may be presented at a fixed relative position, e.g., appearing to be anchored to the wall of the physical environment next to the map 120. Moreover, linking indicators such as indicator 332 are displayed to provide a graphical indication indicating that a given feature of the depiction 340 of map 120 corresponds to a given feature of the additional map 334. Such indications may be identified by identifying a set of one or more most significant features within the boundary, e.g., which features are highest priority accordingly to general or user-specific criteria.

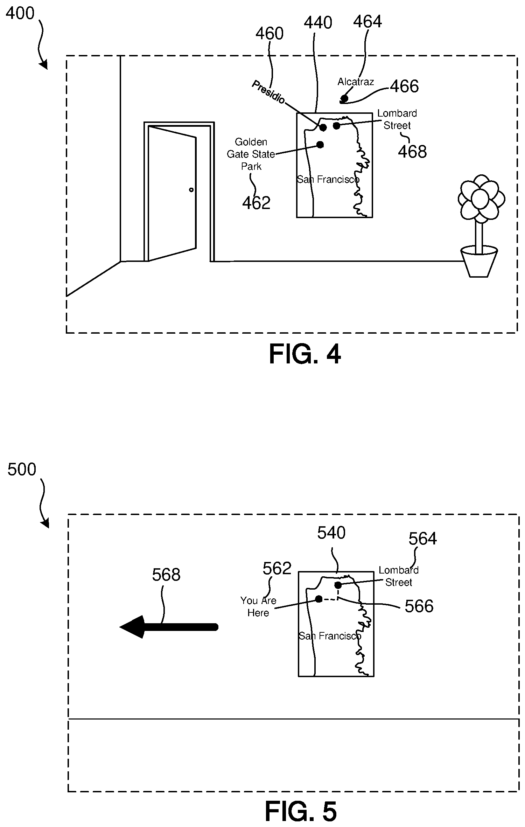

**Figure 4** illustrates another view 400 provided by the electronic device 105 of Figure 1 in which the XR experience is augmented based on the map 120. The view 400 includes depiction 440 of map 120. In this example, the boundaries that were identified based on the map 120 (e.g., as described with respect to Figure 2) are used to identify augmentations for the region within those boundaries (i.e., within a region encompassed by boundaries 232, 242, 252, 262). In the view 400, these augmentations are positioned relative to depiction 340 of map 120, e.g., with indicator dots overlaying locations on the depiction 340 of map 120 and explanatory indicators 460, 462, 464, and 468 added to label and point to the locations of these indicator dots. The augmentations may be positioned at 3D locations corresponding to fixed locations in the physical environment 100, such that the appear consistently in the view 400 provided by the electronic device 400 even as the user 102 moves around and changes the viewpoint of the XR experience.

**Figure 5** illustrates another view 500 provided by the electronic device 105 of Figure 1 in which the XR experience is augmented based on a map. The view 500 includes depiction 540 of the map. In this example, boundaries that were identified based on the map are used to identify augmentations for the XR experience. In the view 500, these augmentations are positioned relative to depiction 540 of map and separately within the XR environment. In this example, a first indicator dot and accompanying text 562 identifies a location on the depiction 540 of the map that corresponds to the user's location within the world, i.e., the user is currently at a building in San Francisco that is at the location of the first indicator dot and accompanying text 562. In addition, a second indicator dot and accompanying text 564 identifies a location to which the user intends to travel (i.e., to a location on Lombard Street in San Francisco). A route indicator 566 is also presented showing the route from the user's current location to the user's intended location on depiction 540 of the map. Virtual content such as overlays and other graphics are used to provide these augmentations. In addition, another augmentation provides an arrow 568 separate from the depiction 540 of the map. The positioning of this augmentation is based on the physical environment 100 rather than the depiction of the map. Specifically, the augmentation is positioned within the view 500 and configured to point in the geographic direction (e.g., east) in which the user 102 should head to go towards along the intended route. Such an augmentation (i.e., arrow 568) may move and change as the user changes viewpoints and/or positions within the environment. For example, as the user walks along the route depicted by route indicator 566, the arrow 568 may remain in the users view and adjust to always point in the direction that the user should proceed from the user's current position to continue along that route. Additional indicators may be presented to facilitate the user's navigation along the route, e.g., showing alternatives, indicating shortcuts, providing warning of hazards, identifying terrain, hills, steps, and other features, identifying the locations of other users, etc.

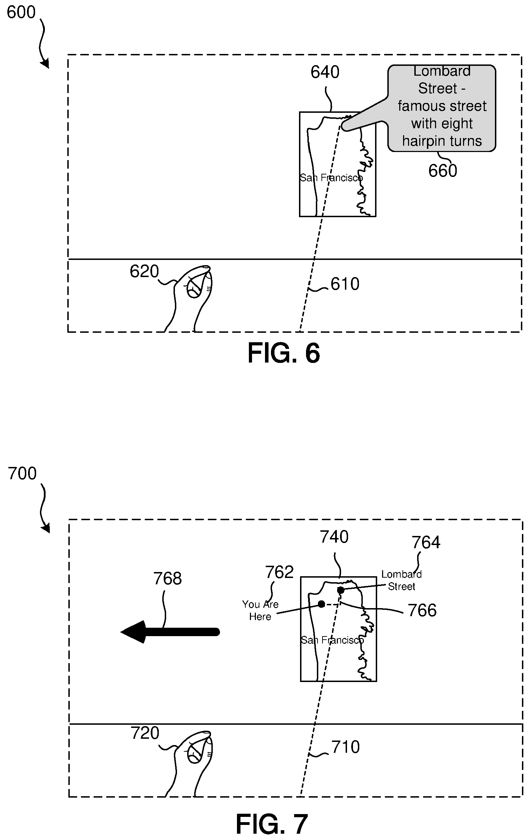

**Figure 6** illustrates another view 600 provided by the electronic device 105 of Figure 1 in which the XR experience is augmented with an interactive feature based on a map. The view 600 includes depiction 640 of the map. In this example, boundaries that were identified based on the map are used to identify one or more augmentations for the XR experience. In the view 600, an augmentation is positioned relative to depiction 640 of map. In this example, the augmentation 662 is provided based on a user interaction. Specifically, the user's gaze direction 610 is identified and determined to correspond to the user looking at a Lombard Street location on the depiction 640 of the map. Moreover, while the user 102 is looking at this point, a user hand gesture 620 (e.g., a pinch gesture) is detected. This combination of gaze and pinch is used to identify a user interaction in which the user intends to identify, select, and/or obtain more information about a particular map location. In this example, in response to detecting this input, an augmentation 660 is provided, providing information about the identified location.

**Figure 7** illustrates another view 700 provided by the electronic device 105 of Figure 1 in which the XR experience is augmented based on the map. In this example, boundaries that were identified based on the map are used to identify augmentations for the XR experience. In the view 700, these augmentations are positioned relative to depiction 740 of map and separately within the XR environment. In this example, a first indicator dot and accompanying text 762 identifies a location on the depiction 740 of the map that corresponds to the user's location within the world, i.e., the user is currently at a building in San Francisco that is at the location of the first indicator dot and accompanying text 762. In addition, a second indicator dot and accompanying text 764 identifies a location to which the user intends to travel (i.e., to a location on Lombard Street in San Francisco). A route indicator 766 is also presented showing the route from the user's current location to the user's intended location on depiction 540 of the map. Virtual content such as overlays and other graphics are used to provide these augmentations.

In addition, another augmentation provides an arrow 768 separate from the depiction 740 of the map. In this example, the augmentation 768 is provided based on a user interaction. Specifically, the user's gaze direction 710 is identified and determined to correspond to the user looking at the route indicator 766. Moreover, while the user 102 is looking at this point, a user hand gesture 720 (e.g., a pinch gesture) is detected. This combination of gaze and pinch is used to identify a user interaction in which the user intends to identify, select, and/or obtain more information about a particular route. In this example, in response to detecting this input, an augmentation 768 is provided pointing in the direction the user should go to follow that route.

In some implementations, a device detects scale. In one example, based on detecting the size of features of a physical map, the scale and/or distance to destinations may be estimated. This may involve using known information/facts, such as the known size of a lake, length of a street, distance between landmarks, size of land edge profiles, etc., the scale of a map and/or distances within the map may be estimated. The device may calculate distance travelled or to be travelled between an origin (e.g., user current position) and a destination.

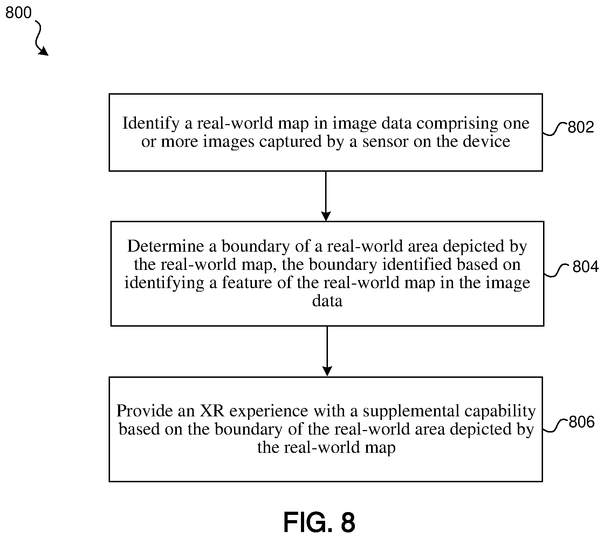

**Figure 8** is a flowchart illustrating a method 800 that augments an XR experience based on a physical map. In some implementations, a device such as electronic device 105 performs method 800. In some implementations, method 800 is performed via an HMD (e.g., an HMD providing pass-through or see-through views of a physical environment). The method 800 is performed by processing logic, including hardware, firmware, software, or a combination thereof. In some implementations, the method 800 is performed on a processor executing code stored in a non-transitory computer-readable medium (e.g., a memory).

At block 802, the method 800 involves identifying a real-world map in image data comprising one or more images captured by a sensor on the device. For example, the real-world map is identified in image data and/or other sensor data using an algorithmic classifier or machine learning-based classifier, or otherwise as described herein or would be understood to those of skill in the art based on the description herein.

At block 804, the method 800 involves determining a boundary of a real-world area (e.g., one or more sides of a bounded rectangular or other-shaped area) depicted by the real-world map. A boundary may be identified based on identifying a feature of the real-world map in the image data. For example, one or more boundaries may be determined based on identifying a top/north-most identified landmark, a right/west-most identified landmark, etc. A boundary may be based on identifying which landmarks are farthest east, west, etc.; identifying a geographic feature that is south-most such as the tip of a peninsula, a building that is visible in the map at a south-most position, etc.

In some implementations, determining the boundary of the real-world area comprises identifying an eastern-most, western-most, northern-most, and southern-most elements depicted in the real-world map. Such elements may include, but are not limited to, landmarks, roads, waterways, bodies of water, land-water boundaries, or geo-political boundaries. Determining the boundary of the real-world area may comprise performing a shape-matching process to identify the eastern-most, western-most, northern-most, and southern-most elements depicted in the real-world map. Determining the boundary may be based on optical character recognition (OCR) identifying a label for an icon depicted in the map and identifying a real-world characteristic associated with the icon.

If the physical map does not have one or more real world boundaries (e.g., at the eastern-, western-, northern-, and southern-most edges), the method may estimate boundaries. For example, this may involve inspecting the map (or the area depicted) for physical landmarks. The method may inspect the map for physical landmarks across the entire region of the physical map and correlate them with landmarks in the real-world area. It may identify shapes and positions of lakes, mountains, rivers, etc., correlate city names on the real-world map (if shown) with a real world area, or otherwise determine features from which a boundary may estimated.

At block 806, the method 800 further involves providing an XR experience with a supplemental capability based on the boundary of the real-world area depicted by the real-world map. As examples, this may involve providing augmentations corresponding to real-world items within the area and/or interactive functionality on the real-world map based on the area. Figures 3-7 illustrate examples of XR experiences provides with supplemental capabilities.

Providing the XR experience with the supplemental capability may involve presenting an XR view that depicts the real-world map with a change, e.g., virtual content associated with a landmark or route on the real-world map, wherein the virtual content is identified based on the boundary. The change may include virtual content that expands the real-world area depicted by the real-world map beyond the boundary. The change may include virtual content corresponding to: a point of interest; or a location previously visited by a user of the electronic device. The change comprises virtual content corresponding to: a route previously taken by the user of the electronic device; or a route to be taken by the user of the electronic device. The change may involve adding an interactive feature to the real-world map. Such interactive feature may include, as examples, recognizing a gaze or input gesture directed towards an element of the real-world map; and initiating a response based on recognizing the input. Providing such a response may involve: identifying a real-world characteristic (e.g., landmark, road, etc.) corresponding to the element of the real-world map; and providing a graphical indication in the map based on the location of the real-world characteristic in the real-world (e.g., arrows, "this way," "this is 4^{th} street", etc.). Providing such a response may involve providing a graphical indication corresponding to the identity and location of the element of the real-world map.

In some implementations, the supplemental capability that is provided provides information about a location of interest identified based on the boundary and user input. In some implementations, the supplemental capability that is provided provides an alternative representation of the physical map having a different format.

In some implementations, a user's location relative to the area depicted in a map is determined and used to enhance the user's experience. For example, the method 800 may determine the user's geographic coordinates based on the devices sensors and/or information systems (e.g., GPS, motions sensors, image sensors, etc.). The device may use the user's location to determine where to place a "you are here" marking, a user representation, or other indicator on the map corresponding to the user's location. In one example, the device obtains or determines where the location of the area shown on the map is geolocated, and then obtains or determines where the user is geolocated and positions the user's location within the correct location on the map based on where the user's geolocation is with respect to the geolocated area represented by the map.

Similarly, destination locations may be determined based on identifying known geographic coordinates of the destination. In one example, the device obtains or determines where the location of the area shown on the map is geolocated, and then obtains or determines where the destination is geolocated and positions the destination's location within the correct location on the map based on where the destination's geolocation is with respect to the geolocated area represented by the map.

Route information may similarly be determined, e.g., identifying the geolocation of a stretch of road that the user will travel on in traveling from a current location to a destination. In one example, the device obtains or determines where the location of the area shown on the map is geolocated, and then obtains or determines where the route is geolocated (e.g., start and ends points) and positions the route's location within the correct location on the map based on where the route's geolocation is with respect to the geolocated area represented by the map.

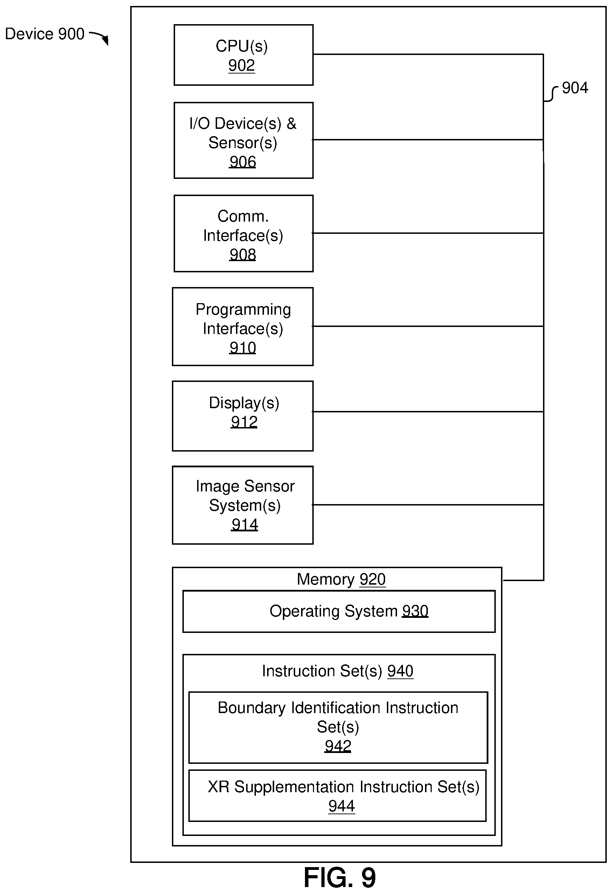

**Figure 9** is a block diagram of electronic device 900. Device 900 illustrates an exemplary device configuration for electronic device 105. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 900 includes one or more processing units 902 (e.g., microprocessors, ASICs, FPGAs, GPUs, CPUs, processing cores, and/or the like), one or more input/output (I/O) devices and sensors 906, one or more communication interfaces 908 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, SPI, I2C, and/or the like type interface), one or more programming (e.g., I/O) interfaces 910, one or more output device(s) 912 (e.g., including displays), one or more interior and/or exterior facing image sensor systems 914, a memory 920, and one or more communication buses 904 for interconnecting these and various other components.

In some implementations, the one or more communication buses 904 include circuitry that interconnects and controls communications between system components. In some implementations, the one or more I/O devices and sensors 906 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more output device(s) 912 include one or more displays configured to present a view of a 3D environment to the user. In some implementations, the one or more displays correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays correspond to diffractive, reflective, polarized, holographic, etc. waveguide displays. In one example, the device 900 includes a single display. In another example, the device 900 includes a display for each eye of the user.

In some implementations, the one or more output device(s) 912 include one or more audio producing devices. In some implementations, the one or more output device(s) 912 include one or more speakers, surround sound speakers, speaker-arrays, or headphones that are used to produce spatialized sound, e.g., 3D audio effects. Such devices may virtually place sound sources in a 3D environment, including behind, above, or below one or more listeners. Generating spatialized sound may involve transforming sound waves (e.g., using head-related transfer function (HRTF), reverberation, or cancellation techniques) to mimic natural soundwaves (including reflections from walls and floors), which emanate from one or more points in a 3D environment. Spatialized sound may trick the listener's brain into interpreting sounds as if the sounds occurred at the point(s) in the 3D environment (e.g., from one or more particular sound sources) even though the actual sounds may be produced by speakers in other locations. The one or more output device(s) 912 may additionally or alternatively be configured to generate haptics.

In some implementations, the one or more image sensor systems 914 are configured to obtain image data that corresponds to at least a portion of a physical environment. For example, the one or more image sensor systems 914 may include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 914 further include illumination sources that emit light, such as a flash. In various implementations, the one or more image sensor systems 914 further include an on-camera image signal processor (ISP) configured to execute a plurality of processing operations on the image data.

The memory 920 includes high-speed random-access memory, such as DRAM, SRAM, DDR RAM, or other random-access solid-state memory devices. In some implementations, the memory 920 includes non-volatile memory, such as one or more magnetic disk storage devices, optical disk storage devices, flash memory devices, or other non-volatile solid-state storage devices. The memory 920 optionally includes one or more storage devices remotely located from the one or more processing units 902. The memory 920 comprises a non-transitory computer readable storage medium.

In some implementations, the memory 920 or the non-transitory computer readable storage medium of the memory 920 stores an optional operating system 930 and one or more instruction set(s) 940. The operating system 930 includes procedures for handling various basic system services and for performing hardware dependent tasks. In some implementations, the instruction set(s) 940 include executable software defined by binary information stored in the form of electrical charge. In some implementations, the instruction set(s) 940 are software that is executable by the one or more processing units 902 to carry out one or more of the techniques described herein.

The instruction set(s) 940 include boundary identification instruction set(s) 942 configured to, upon execution, perform identify one or more boundaries associated with a map as described herein. The instruction set(s) 940 include XR supplementation instruction set(s) 944 configured to, upon execution, perform supplement an XR experience as described herein. The instruction set(s) 940 may be embodied as a single software executable or multiple software executables.

Although the instruction set(s) 940 are shown as residing on a single device, it should be understood that in other implementations, any combination of the elements may be located in separate computing devices. Moreover, the figure is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

It will be appreciated that the implementations described above are cited by way of example, and that the present invention is not limited to what has been particularly shown and described hereinabove. Rather, the scope includes both combinations and sub combinations of the various features described hereinabove, as well as variations and modifications thereof which would occur to persons skilled in the art upon reading the foregoing description and which are not disclosed in the prior art.

As described above, one aspect of the present technology is the gathering and use of sensor data that may include user data to improve a user's experience of an electronic device. The present disclosure contemplates that in some instances, this gathered data may include personal information data that uniquely identifies a specific person or can be used to identify interests, traits, or tendencies of a specific person. Such personal information data can include movement data, physiological data, demographic data, location-based data, telephone numbers, email addresses, home addresses, device characteristics of personal devices, or any other personal information.

The present disclosure recognizes that the use of such personal information data, in the present technology, can be used to the benefit of users. For example, the personal information data can be used to improve the content viewing experience. Accordingly, use of such personal information data may enable calculated control of the electronic device. Further, other uses for personal information data that benefit the user are also contemplated by the present disclosure.

The present disclosure further contemplates that the entities responsible for the collection, analysis, disclosure, transfer, storage, or other use of such personal information and/or physiological data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates implementations in which users selectively block the use of, or access to, personal information data. That is, the present disclosure contemplates that hardware or software elements can be provided to prevent or block access to such personal information data. For example, in the case of user-tailored content delivery services, the present technology can be configured to allow users to select to "opt in" or "opt out" of participation in the collection of personal information data during registration for services. In another example, users can select not to provide personal information data for targeted content delivery services. In yet another example, users can select to not provide personal information, but permit the transfer of anonymous information for the purpose of improving the functioning of the device.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences or settings based on non-personal information data or a bare minimum amount of personal information, such as the content being requested by the device associated with a user, other non-personal information available to the content delivery services, or publicly available information.

In some embodiments, data is stored using a public/private key system that only allows the owner of the data to decrypt the stored data. In some other implementations, the data may be stored anonymously (e.g., without identifying and/or personal information about the user, such as a legal name, username, time and location data, or the like). In this way, other users, hackers, or third parties cannot determine the identity of the user associated with the stored data. In some implementations, a user may access their stored data from a user device that is different than the one used to upload the stored data. In these instances, the user may be required to provide login credentials to access their stored data.

Numerous specific details are set forth herein to provide a thorough understanding of the claimed subject matter. However, those skilled in the art will understand that the claimed subject matter may be practiced without these specific details. In other instances, methods apparatuses, or systems that would be known by one of ordinary skill have not been described in detail so as not to obscure claimed subject matter.

Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general-purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description and summary of the invention are to be understood as being in every respect illustrative and exemplary, but not restrictive, and the scope of the invention disclosed herein is not to be determined only from the detailed description of illustrative implementations but according to the full breadth permitted by patent laws. It is to be understood that the implementations shown and described herein are only illustrative of the principles of the present invention and that various modification may be implemented by those skilled in the art without departing from the scope and spirit of the invention.

Exemplary embodiments of the present disclosure are set out in the following items:
1. A method comprising:
   at an electronic device comprising a processor:
   identifying a real-world map in image data comprising one or more images captured by a sensor on the device;
   determining a region of a real-world area depicted by the real-world map, the region identified based on identifying a feature of the real-world map in the image data; and
   providing an extended reality (XR) experience with a supplemental capability based on the region of the real-world area depicted by the real-world map.
2. The method of item 1, wherein identifying the region comprises identifying a boundary of the real-world area, wherein the supplemental capability is based on the boundary of the real-world area.
3. The method of any of items 1-2, wherein providing the XR experience with the supplemental capability comprises presenting an XR view that depicts the real-world map with a change.
4. The method of item 3, wherein the change comprises virtual content associated with a landmark or route on the real-world map, wherein the virtual content is identified based on the boundary.
5. The method of any of items 3-4, wherein the change comprises virtual content that expands the real-world area depicted by the real-world map beyond the boundary.
6. The method of any of items 3-5, wherein the change comprises virtual content corresponding to:
   a point of interest; or
   a location previously visited by a user of the electronic device.
7. The method of any of items 3-6, wherein the change comprises virtual content corresponding to:
   a route previously taken by the user of the electronic device; or
   a route to be taken by the user of the electronic device.
8. The method of any of items 3-7, wherein the change comprises adding an interactive feature to the real-world map.
9. The method of item 8, wherein the interactive feature comprises:
   recognizing a gaze or input gesture directed towards an element of the real-world map; and
   initiating a response based on recognizing the input.
10. The method of item 9, wherein the response comprises:
   identifying a real-world characteristic corresponding to the element of the real-world map; and
   providing a graphical indication in the map based on the location of the real-world characteristic in the real-world.
11. The method of any of items 9-10, wherein the response comprises providing a graphical indication corresponding to the identity and location of the element of the real-world map.
12. The method of any of items 1-11, wherein determining the boundary of the real-world area comprises identifying an eastern-most, western-most, northern-most, and southern-most elements depicted in the real-world map.
13. The method of item 12, wherein the elements are landmarks, roads, waterways, bodies of water, land-water boundaries, or geo-political boundaries.
14. The method of any of items 12-13, wherein determining the boundary of the real-world area comprises performing a shape-matching process to identify the eastern-most, western-most, northern-most, and southern-most elements depicted in the real-world map.
15. The method of any of items 12-14, wherein determining the boundary is based on optical character recognition (OCR) identifying a label for an icon depicted in the map and identifying a real-world characteristic associated with the icon.
16. The method of any of items 1-15, wherein the real-world map is identified in the image data using an algorithmic classifier or machine learning-based classifier.
17. The method of any of items 1-16, wherein the electronic device is a head-mounted device.
18. The method of any of items 1-17, wherein the supplemental capability comprises providing information about a location of interest identified based on the boundary and user input.
19. The method of any of items 1-18, wherein the supplemental capability comprises providing an alternative representation of the physical map having a different format.
20. A system comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the system to perform operations of any one of the methods of items 1-19.
21. A computer-readable storage medium, optionally non-transitory, storing program instructions executable via one or more processors to perform operations of any one of the methods of items 1-19.

## Claims

1. A method comprising:
at an electronic device comprising a processor:
identifying a real-world map in image data comprising one or more images captured by a sensor on the device;
determining a region of a real-world area depicted by the real-world map, the region identified based on identifying a feature of the real-world map in the image data; and
providing an extended reality (XR) experience with a supplemental capability based on the region of the real-world area depicted by the real-world map.

2. The method of claim 1, wherein identifying the region comprises identifying a boundary of the real-world area, wherein the supplemental capability is based on the boundary of the real-world area.

3. The method of any of claims 1-2, wherein providing the XR experience with the supplemental capability comprises presenting an XR view that depicts the real-world map with a change.

4. The method of claim 3, wherein the change comprises virtual content associated with a landmark or route on the real-world map, wherein the virtual content is identified based on the boundary.

5. The method of any of claims 3-4, wherein the change comprises virtual content that expands the real-world area depicted by the real-world map beyond the boundary.

6. The method of any of claims 3-5, wherein the change comprises virtual content corresponding to:
a point of interest; or
a location previously visited by a user of the electronic device.

7. The method of any of claims 3-6, wherein the change comprises virtual content corresponding to:
a route previously taken by the user of the electronic device; or
a route to be taken by the user of the electronic device.

8. The method of any of claims 3-7, wherein the change comprises adding an interactive feature to the real-world map.

9. The method of claim 8, wherein the interactive feature comprises:
recognizing a gaze or input gesture directed towards an element of the real-world map; and
initiating a response based on recognizing the input, wherein the response comprises:
identifying a real-world characteristic corresponding to the element of the real-world map and providing a graphical indication in the map based on the location of the real-world characteristic in the real-world; or
providing a graphical indication corresponding to the identity and location of the element of the real-world map.

10. The method of any of claims 1-9, wherein determining the boundary of the real-world area comprises identifying an eastern-most, western-most, northern-most, and southern-most elements depicted in the real-world map, wherein the elements are landmarks, roads, waterways, bodies of water, land-water boundaries, or geo-political boundaries.

11. The method of any of claims 10, wherein determining the boundary of the real-world area comprises performing a shape-matching process to identify the eastern-most, western-most, northern-most, and southern-most elements depicted in the real-world map.

12. The method of any of claims 1-11, wherein determining the boundary is based on optical character recognition (OCR) identifying a label for an icon depicted in the map and identifying a real-world characteristic associated with the icon.

13. The method of any of claims 1-12, wherein the real-world map is identified in the image data using an algorithmic classifier or machine learning-based classifier.

14. A system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations of any one of the methods of claims 1-13.

15. A non-transitory computer-readable storage medium storing program instructions executable via one or more processors to perform operations of any one of the methods of claims 1-13.
